# EUROPEAN PATENT APPLICATION

(11) **EP 1 976 223 A1**
(43) Date of publication of application: **01.10.2008**
(21) Application number: 08006103.9
(22) Date of filing: 28.03.2008
(51) Int. Cl.: H04L 29/06, G06K 19/07, G06K 19/077

(54) **Method for cryptographically combining HF and UHF RFID tags/smart cards to create a single multi-use RFID tag**

(30) Priority: 30.03.2007 US 908999 P; 25.03.2008 US 55270
(71) Applicant: Skyetek, Inc, Westminster, Colorado 80020 (US)
(72) Inventor: Bruns, Logan, Napa, California 94559 (US); Chakraborty, Sayan, Niwot, Colorado 80503 (US)
(74) Representative: Hughes, Andrea Michelle

(57) **Abstract**

A method for creating an enhanced RFID tag. A longer range RFID tag and a relatively shorter range credential are proximately co-located in the same container. The longer range RFID tag is cryptographically bound to the shorter range credential by storing, on the longer range tag, signed data which includes indicia of the shorter range tag. The longer range RFID tag requires authorization via an authentication server to grant access to data stored in the enhanced RFID tag.

## Description

### BACKGROUND

A tag reader in a radio frequency identification (RFID) system uses an antenna to send radio frequency (RF) signals to an RFID tag. In response to the RF signals from the reader antenna, the RFID tag produces a disturbance in the magnetic (or electric) field that is detected by the reader antenna when a particular tag is within the detection range of the reader.

The detection range of RFID systems is typically limited by signal strength to short ranges. An HF RFID tag is typically more expensive than a typical UHF tag, and an HF tag generally has a comparatively shorter operational range. Conversely, a UHF RFID tag is typically less expensive than a typical HF tag and supports longer-range communications. HF RFID tags generally provide more stringent security features than UHF tags, which may provide little or no security with respect to access to information stored on a tag or with respect to cloning or forging of tag credentials.

### BRIEF DESCRIPTION OF THE DRAWINGS

**Figure 1A** shows an exemplary system for cryptographically combining two electronic credentials, such as a UHF RFID tag and an HF RFID tag/smart card to create a single multi-use credential or 'enhanced' RFID tag;

**Figure 1B** shows an exemplary variant of the present method, which combines a UHF RFID tag with a contact smart card or a combination contact/contactless smart card to create an enhanced RFID tag;

**Figure 2** is a flowchart showing an exemplary method for cryptographically linking a non-secure UHF RFID tag to a secure HF RFID tag; and

**Figure 3** is a flowchart showing an exemplary method for using an enhanced tag 100 as a component in a security system.

### DETAILED DESCRIPTION

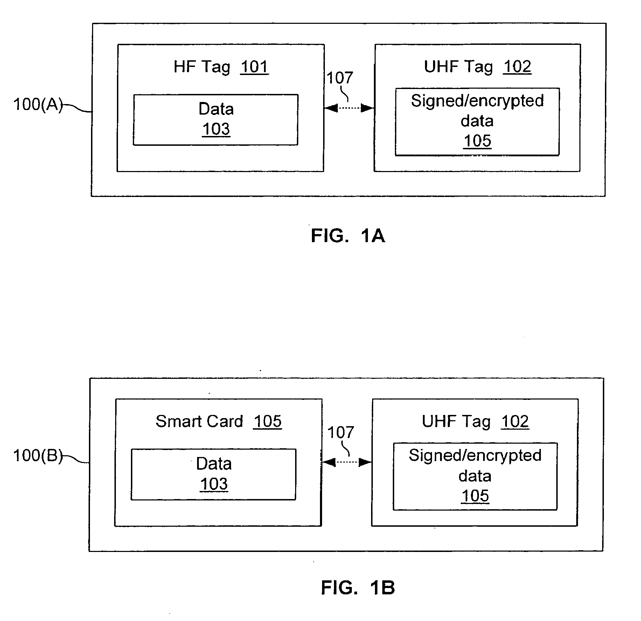

**Figure 1A** shows an exemplary system for cryptographically combining two electronic credentials, such as a UHF RFID tag 102 and an HF RFID tag/smart card 101 to create a single multi-use credential or 'enhanced' RFID tag 100(A). The present system employs a method for cryptographically linking a non-secure UHF RFID tag 102 to a secure HF RFID tag 101 such that, in combination, the resulting 'enhanced' tag 100 provides the benefits of both tag types while ameliorating disadvantages of both. In an exemplary embodiment, the enhanced tag is included in a single tamper-proof piece of physical media, to protect against physical tampering.

**Figure 1B** shows an exemplary variant of the present method, which combines a UHF RFID tag 102 with a contact smart card 105 (ISO7816, for example) or a combination contact/contactless smart card 105 (ISO7816 + ISO14443, for example) to create an enhanced RFID tag 100(B). In both tags 100(A) and 100(B), the UHF tag 102 may be optionally coupled to the second (the HF) tag 101 or to smart card 105 via shared memory 107. Hereinafter, references to "HF tags" 101 are also applicable to "smart cards" 105. Alternatively, the HF tag 101 may be a magnetic stripe - the UHF tag is used most of the time, and occasionally the user is required to swipe the magnetic stripe to reconfirm the validity of the UHF tag.

In an exemplary embodiment, the two types of tags (UHF tag 102 and the second tag/card type 101/105) are proximately co-located (i.e., within approximately 2 cm or less of each other, or within a distance not greater than the range of the HF tag) in the same container or packaging unit, such as an ISO hard card or standard credit card, which provides enhanced protection against 'tearing' attacks where one of the credentials is separated and replaced. In the present system, the linkage between the UHF tag 102 and the HF tag 101/105 is cryptographic, in the form of a digital signature. This is equivalent to linking a relatively secure credential, e.g., a passport, to another, weaker credential, e.g., an employee badge. In the present analogy, the badge, typically used on a regular basis (e.g., daily), is backed up by the passport (and cryptographically linked to it) so that the badge ID can be periodically confirmed by the valid passport that was used to validate the badge holder's identity in the first place.

This enhanced RFID tag 100 allows new and enhanced uses for RFID applications including:
(1) using the HF tag 101 to prevent cloning of unsecured UHF tags used for consumables;
(2) using UHF tag 102 for asset/person tracking with occasional HF identity verifications to confirm the identity of the asset being tracked; and
(3) using the dual tag in a Kerberos- or SAML-like mode where the HF tag 101 is the long lived credential (which is protected by its short range of use and security features) and the UHF tag 102 is the Kerberos ticket or SAML name assertion equivalent. This allows the UHF tag 101 to be used for access at significant range (which additionally allows for ease of use, such as with wheelchair door access). The HF tag 101 can be used as an extension of the trust base (e.g., a Kerberos server), allowing many transactions to be completed offline without the need to do a live lookup to a trust system for every transaction. The present method significantly extends the utility of systems like Liberty/SAML and Kerberos, which are otherwise designed to always perform online trust verification.

Given a UHF tag 102 and an HF tag 101, where it is more likely (although not required), that the HF tag has more processing capabilities, on many occasions it may be possible to access the UHF tag but not the HF tag (due to the distance between the enhanced tag and the reader, for example). The present method authenticates the UHF tag 102 and binds it to a specific HF tag 101. The present method also provides partial protection against cloning of the UHF tag and privacy for the carrier of the UHF tag.

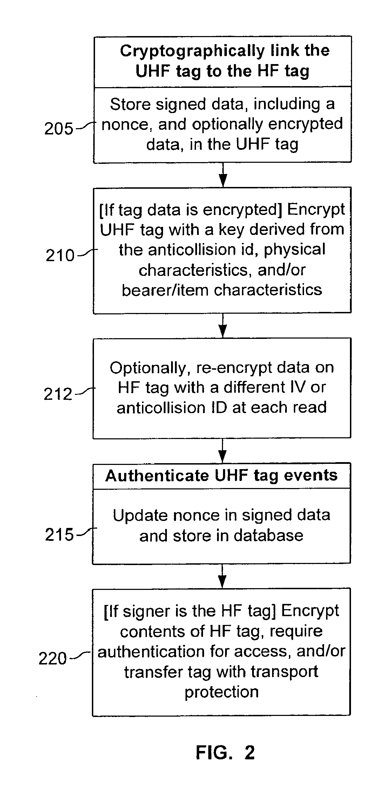

**Figure 2** is a flowchart showing an exemplary method for cryptographically linking a non-secure UHF RFID tag 102 to a secure HF RFID tag 101. The cryptographic linkage of the UHF tag 102 to the HF tag 101 is performed as follows (in all cases, the HF tag may be replaced by a contact smart card or combination contact and contactless smart card), as shown in Figure 2. Initially, at step **205,** signed and optionally encrypted data is stored on the UHF tag 102. In an exemplary embodiment, a nonce (a number used only once) is included in the signed data. The tag signature may be a symmetric signature (e.g. full or truncated HMAC) or an asymmetric signature (e.g. ECDSA, RSA or DSA). The signer may be the HF tag itself, third party trusted authority, or both. The signed data may include the HF tag's public ID, HF tag's private ID, HF tag's public key, UHF tag's physical characteristics (e.g. non-linear characteristics used as a hardware fingerprint, specific response timings or other physical based characteristics), an external unique ID, bearer/item characteristics, a nonce, timestamp and application-specific data.

At step **210,** if the data on the UHF tag 102 is encrypted, it may be encrypted with a key derived from any or all of the anticollision ID, physical characteristics, and bearer/item characteristics. At step **212,** if the data is encrypted it may be re-encrypted with a different IV (initial vector) or anticollision ID at each read to provide additional privacy by effectively changing the visible contents of the tag, even if the encrypted contents remain largely or entirely the same. Alternatively, the UHF tag 102 may be re-encrypted according to a policy, for example, once per day, or by way of a policy requiring interaction with the HF tag part of the enhanced tag 100 once per day according to whether the timestamp for the UHF tag has been updated to the current day.

UHF tag events may be authenticated at read time or in batch mode at the next HF tag-RFID reader interaction. Protection against cloning and rollback may be enhanced by updating the nonce, at step **215.** In the case of a symmetric key solution this nonce can be updated by a reader and stored in a database at a given authority (which may be transferred to another authority over time by an authority to authority protocol). In the case of an asymmetric key solution, the same can be done, or the nonce update can be deferred to the next time both HF and UHF tags 101/102 are read together.

In the case where the signer is the HF tag 101 it may be the case that the HF tag is either a smart card, a simple memory card, or a memory card with limited cryptographic capabilities (e.g., DESFire, CryptoRF). In the latter two cases where the HF tag 101 is a memory card, the card may contain the symmetric or asymmetric private key which is used by the reader but not retained by the reader. Alternatively, it may be the case that the HF tag's private key is derived from a master key plus attributes of, and data stored on, the HF tag. As indicated at step 220, the contents of HF tag 101 may be encrypted, require authentication for access thereto, be transferred with transport protection, or any combination of such options.

The above-described method may be combined with sequence numbers and authoritative transfers. The latter case includes the use of anticloning UHF transactions between HF verifications then tracking UHF (while maintaining privacy) between HF verifications.

Sequence numbers are used to foil replay attacks. A tag having sequence number N indicates that the tag has had N uses, and the consumer of the ticket checks that number against what it expects the next sequence number to be. Thus, for example, if it is expected that there are 10 uses left (e.g., sequence number 90 out of 100), and a particular tag has a sequence number 10 of 100, then either the tag was legally recharged or a replay attack is being attempted.

An authoritative transfer occurs when the owner of the ticket is legitimately changed (which is otherwise, always considered to be an attack). This technique is typically employed by a trusted third party overseeing the transfer.

With or without additional anticloning protections, the present dual-tag method may be used with risk management routines to perform a Kerberos style single sign-on or transfer of high value credentials to long value credentials for limited duration. Kerberos is a computer network authentication protocol which allows individuals communicating over a non-secure network to prove their identity to one another in a secure manner. Kerberos builds on symmetric key cryptography and requires a trusted third party. Kerberos uses as its basis the Needham-Schroeder protocol, which makes use of a trusted third party, termed a key distribution center (KDC), which consists of two logically separate parts: an Authentication Server (AS) and a Ticket Granting Server (TGS). Kerberos works on the basis of 'tickets' which serve to prove the identity of users. The KDC maintains a database of secret keys; each entity on the network - whether a client or a server - shares a secret key known only to itself and to the KDC. Knowledge of this key serves to prove an entity's identity. For communication between two entities, the KDC generates a session key which they can use to secure their interactions.

An analogy to Kerberos may be drawn in the present system, where a high value credential (e.g., a Ticket Granting Ticket or TGT) is used to obtain access to a service ticket that is essentially a signed (technically, an encrypted) service entitlement. That entitlement is then presented repeatedly until it expires. This process may be viewed as being similar to the HF tag corresponding to the TGT while the UHF tag stores the signed service entitlements.

In the above case the HF tag 101 has two roles: both the TGT and the actual Kerberos server itself. Purely offline transactions may be supported with the majority of the risk management state and logic being stored (but not necessarily processed) on the HF tag 101. Offline transactions may be considered as transactions not requiring immediate access to an authorization / authentication server such as a Kerberos server, but relying on such an interaction having occurred some time in the past and occurring again at some point in the future. Thus, as long as the HF tag 101 is valid, it may issue the service entitlements according to policy stored in it. The HF tag 101 may also act more like a TGT in the sense that it may require that it be unlocked only periodically with a high value credential such as a fingerprint, pin or attendant verified photo.

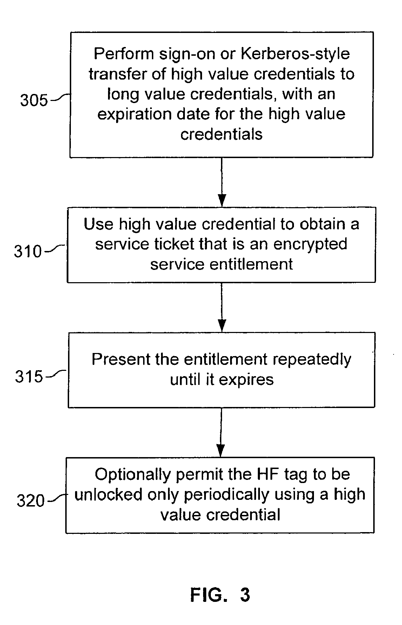

**Figure 3** is a flowchart showing an exemplary method for using an enhanced tag 100 as a component in a security system, wherein the HF tag 101 corresponds to a high-value credential (e.g., TGT), and contains rules including the TGT and Kerberos server rules, while the UHF tag 102 stores the signed service entitlements. As shown in Figure 3, at step 305, the enhanced tag 100 is used to perform a Kerberos-style single sign-on or transfer of high value credentials to long value credentials for a limited duration. At step **310,** HF tag 101 uses a high value credential (e.g., TGT) to obtain a service ticket that is an encrypted service entitlement.

At step **315,** the entitlement is presented to one or more readers repeatedly until the entitlement expires. While the HF tag 101 is valid, it issues the service entitlements according to policy stored therein. Offline transactions are supported with risk management state and logic being stored on the HF tag. The HF tag may optionally permit its being unlocked only periodically using a high value credential such as a fingerprint, a PIN, and an attendant-verified photograph, as indicated at step **320.**

'Tips' to help include risk management in the service entitlements may be included in the present system, for example, statements tied to the UHF part of the enhanced card 100, such as whether the holder is an adult or child. In addition, risk management rules may also be included, such as determining if a particular procedure is performed more than N times, and if so, then revoking this service entitlement.

The present system may also be employed in a scenario where there is more than one service to be unlocked and service access to the UHF portion of the enhanced card 100 is allowed instead of tag tracking only. One example of an application for the present system is access control where there are a number of automatic doors to different parts of facility, such as in a hospital. The hospital may divide different departments into different services and require that they authenticate with their HF tag once every given amount of time, but otherwise use UHF to allow individuals to enter a door, or detect whether there is more than one person present at the door. For some high value doors, an HF swipe may still be required [rather than dual factor (HF and UHF) swipes] except once a day, or after some inactivity timeout. Hospital employees, for example, may also be required to use a fingerprint or PIN. Then, fast free access would still be allowed, while maintaining reasonable security, and also maintaining an audit of employee movements (for the purpose of tracking down drug theft, for example).

While preferred embodiments of the disclosed subject matter have been described, so as to enable one of skill in the art to practice this subject matter, the preceding description is intended to be exemplary only, and should not be used to limit the scope of the disclosure, which should be determined by reference to the following claims.

## Claims

1. A method for creating an enhanced RFID tag comprising:
proximately co-locating a longer range RFID tag and a relatively shorter range credential in the same container; and
cryptographically binding the longer range RFID tag to the shorter range credential by storing, on the longer range tag, signed data including indicia of the shorter range tag;
wherein the longer range RFID tag requires authorization via an authentication server to grant access to data stored in the enhanced RFID tag.

2. The method of claim 1, wherein said indicia includes at least one of the types of indicia in the set of indicia consisting of the shorter range tag's public ID, the shorter range tag's private ID, the shorter range tag's public key, physical characteristics of the longer range tag, an external unique ID, characteristics of the tag bearer, characteristics of an item to which the enhanced tag is affixed, and a timestamp.

3. The method of claim 1, wherein the enhanced tag is authenticated by initially including, and subsequently updating, a nonce in the signed data, each time the longer range tag is read.

4. The method of claim 1, wherein the shorter range credential is a contact smart card.

5. The method of claim 1, wherein the shorter range credential is a contactless smart card.

6. The method of claim 1, wherein the longer range RFID tag is a UHF RFID tag, and the shorter range credential is an HF RFID tag.

7. The method of claim 1, wherein the enhanced tag is used as a component in a security system, further including:
performing a transfer of high value credentials to long value credentials that are valid for a limited duration and stored in the shorter range credential,
using the shorter range credential to obtain a signed service entitlement, in the form of a service ticket, stored in the longer range RFID tag; and
presenting the entitlement to a tag reader repeatedly until the entitlement expires;
wherein the shorter range credential contains rules including ticket granting ticket (TGT) and Kerberos server rules; and
while the shorter range credential is valid, the shorter range credential issues the service entitlement according to policy stored therein.

8. The method of claim 7, wherein the shorter range credential permits its being unlocked only periodically using a high value credential selected from the list consisting of a fingerprint, a PIN, and an attendant-verified photograph.

9. The method of claim 7, wherein offline transactions are supported with risk management state and logic being stored on the shorter range credential.

10. A method for creating an enhanced RFID tag comprising:
proximately co-locating a longer range RFID tag and a shorter range credential in the same container;
cryptographically binding the longer range RFID tag to the shorter range credential by storing, on the longer range tag, signed data including indicia of the shorter range tag;
encrypting the data on the longer range tag with a key derived from at least one characteristic selected from the set of characteristics consisting of an anticollision ID, physical characteristics of the enhanced tag, characteristics of the tag bearer, and characteristics of an item to which the enhanced tag is affixed;
re-encrypting the longer range tag with a different initial vector (IV) each time the longer range tag is read to effectively change the contents thereof;
authenticating the enhanced tag by including and updating a nonce in the signed data; and
updating the nonce by an RFID reader and storing the nonce in a database at a given authority.

11. The method of claim 10, wherein said indicia includes at least one of the types of indicia in the set of indicia consisting of the shorter range tag's public ID, the shorter range tag's private ID, the shorter range tag's public key, physical characteristics of the longer range tag, an external unique ID, characteristics of the tag bearer, characteristics of an item to which the enhanced tag is affixed, and a timestamp.

12. The method of claim 10, wherein the enhanced tag is authenticated by initially including, and subsequently updating, a nonce in the signed data, each time the longer range tag is read.

13. The method of claim 10, wherein the enhanced tag is used as a component in a security system, further including:
performing a transfer of high value credentials to long value credentials that are valid for a limited duration and stored in the shorter range credential,
using the shorter range credential to obtain a signed service entitlement, in the form of a service ticket, stored in the longer range RFID tag;
presenting the entitlement to a tag reader repeatedly until the entitlement expires;
wherein the shorter range credential contains rules including TGT and Kerberos server rules; and
while the shorter range credential is valid, the shorter range credential issues the service entitlement according to policy stored therein.

14. The method of claim 10, wherein the shorter range credential permits its being unlocked only periodically using a high value credential selected from the list consisting of a fingerprint, a PIN, and an attendant-verified photograph.

15. The method of claim 10, wherein offline transactions are supported with risk management state and logic being stored on the shorter range credential.

16. The method of claim 10, wherein the HF tag is re-encrypted with a different anticollision ID after each time the longer range tag is read.

17. The method of claim 10, wherein the shorter range credential is a contact RFID tag.

18. The method of claim 10, wherein the shorter range credential is a smart card.

19. The method of claim 10, wherein the longer range RFID tag is a UHF tag, and the shorter range credential is an HF tag.

20. The method of claim 10, wherein, in the case where the encrypted data is encrypted with a symmetric key, the step of updating the nonce is deferred until the next time both the HF tag and the UHF tags are read together.

21. An enhanced RFID tag comprising:
a longer range RFID tag (102) and a shorter range credential (101), proximately co-located in the same container;
wherein the longer range RFID tag is cryptographically bound to the shorter range credential by storing, on the longer range tag, signed data including indicia of the shorter range tag; and
wherein the longer range RFID tag requires authorization via an authentication server for access to data stored in the enhanced RFID tag.

22. The enhanced RFID tag of claim 21, wherein the shorter range credential is a contact RFID tag (102).

23. The enhanced RFID tag of claim 21, wherein the shorter range credential is a smart card (105).

24. The enhanced RFID tag of claim 21, wherein the longer range RFID tag is a UHF tag (107), and the shorter range credential is an HF tag (101).

25. The enhanced RFID tag of claim 21, wherein the longer range RFID tag and the shorter range credential are situated within approximately 2 cm of each other.

26. The enhanced RFID tag of claim 21, wherein the enhanced RFID tag has a credit card form factor.

27. The enhanced RFID tag of claim 21, wherein the enhanced RFID tag has an ISO hard card form factor.

28. The enhanced RFID tag of claim 21, wherein the enhanced tag is authenticated by initially including, and subsequently updating, a nonce in the signed data, each time the longer range tag is read.

29. A security system including the enhanced RFID tag of claims 21 to 28, said security system further including:
means for performing a transfer of high value credentials to long value credentials that are valid for a limited duration and stored in the shorter range credential,
means for using the shorter range credential to obtain a signed service entitlement, in the form of a service ticket, stored in the longer range RFID tag; and
means for presenting the entitlement to a tag reader repeatedly until the entitlement expires;
wherein the shorter range credential contains rules including ticket granting ticket (TGT) and Kerberos server rules; and
while the shorter range credential is valid, the shorter range credential issues the service entitlement according to policy stored therein.
